Europäisches Patentamt

European Patent Office

Office européen des brevets

(11) Publication number: **0 064 335**
**B1**

(12) **EUROPEAN PATENT SPECIFICATION**

(45) Date of publication of patent specification: **17.07.85**

(21) Application number: **82301855.1**

(22) Date of filing: **07.04.82**

(51) Int. Cl.⁴: **B 60 R 1/06**

(54) **Rear-view mirror for motor vehicles.**

(30) Priority: **02.05.81 GB 8113725**

(43) Date of publication of application:
**10.11.82 Bulletin 82/45**

(45) Publication of the grant of the patent:
**17.07.85 Bulletin 85/29**

(84) Designated Contracting States:
**DE FR GB**

(56) References cited:
**DE-A-2 411 319**
**DE-A-2 431 735**
**DE-A-3 010 786**
**FR-A-2 405 843**
**GB-A- 813 086**

(73) Proprietor: **BRITAX (WINGARD) LIMITED**
**Chandler Road**
**Chichester Sussex, PO19 2UG (GB)**
(73) Proprietor: **BRITAX (GECO) S.A.**
**1 et 3 Route d'Héricy**
**F-77870 Vulaines s/ Seine (FR)**

(72) Inventor: **Bottrill, John**
**"Moelfre" 9 Langdale Avenue**
**Chichester West Sussex (GB)**
Inventor: **Lafont, Raymond Jean-Baptiste**
**49 Avenue Kleber**
**F-75116 Paris (FR)**

(74) Representative: **Hollinghurst, Antony**
**Britax Central Services 40 Granby Avenue**
**Garretts Green Birmingham, B33 OSJ (GB)**

Courier Press, Leamington Spa, England.

## Description

This invention relates to an exterior rear-view mirror for a vehicle which is adjustable from the interior of the vehicle and which comprises a bracket adapted to be secured to the vehicle and having a part-spherical surface, a mirror housing having a coupling surface, a coupling member having a first coupling surface of part-spherical shape of equal radius but opposite curvature to the part-spherical surface of the bracket and a second coupling surface shaped to engage with the coupling surface of the mirror housing so as to permit angular movement of the coupling member relative to the bracket about a pivot axis through the centre of curvature of said part-spherical surface and angular movement of the mirror housing relative to the coupling member; resilient biasing means, arranged to bias the part-spherical surface of the bracket into engagement with the first coupling surface of the coupling member and to bias the coupling surface of the mirror housing into engagement with the second coupling surface of the coupling member and a handle permanently secured to said coupling member for simultaneous angular movement therewith about said pivot axis.

A mirror of this type is disclosed in Patent Specification FR—A—2405843, movement of the coupling member relative to the bracket permitting adjustment of the orientation of the mirror housing, and movement of the mirror housing relative to the coupling member allowing the housing to deflect in the event of impact. The coupling member increases the distance between the mirror housing and the bracket, thus complicating the precautions neccessary to ensure that this deflection is not impeded by the means coupling the handle to the mirror housing.

According to the characterising part of claim 1, the distance between the bracket and the mirror housing can be reduced.

According to the characterising part of claim 2, the coupling means between the handle and the mirror housing can be located outside the mirror housing. Consequently, the coupling means does not impede deflection of the mirror housing in the event of impact. Furthermore, the resilient biasing means can also be installed outside the mirror housing.

An embodiment of the invention will now be described, by way of example, with reference to the accompanying drawings, in which:

Figure 1 is a transverse vertical sectional view of an exterior rear-view mirror in accordance with one embodiment of the invention,

Figure 2 is a cross-sectional view taken on the line 2—2 in Figure 1,

Figure 3 is a plan view of an exterior rear-view mirror in accordance with another embodiment of the invention,

Figure 4 is a cross-sectional view taken on the line 4—4 in Figure 3, and

Figure 5 is a cross-sectional view, similar to Figure 4, of a further embodiment of the invention.

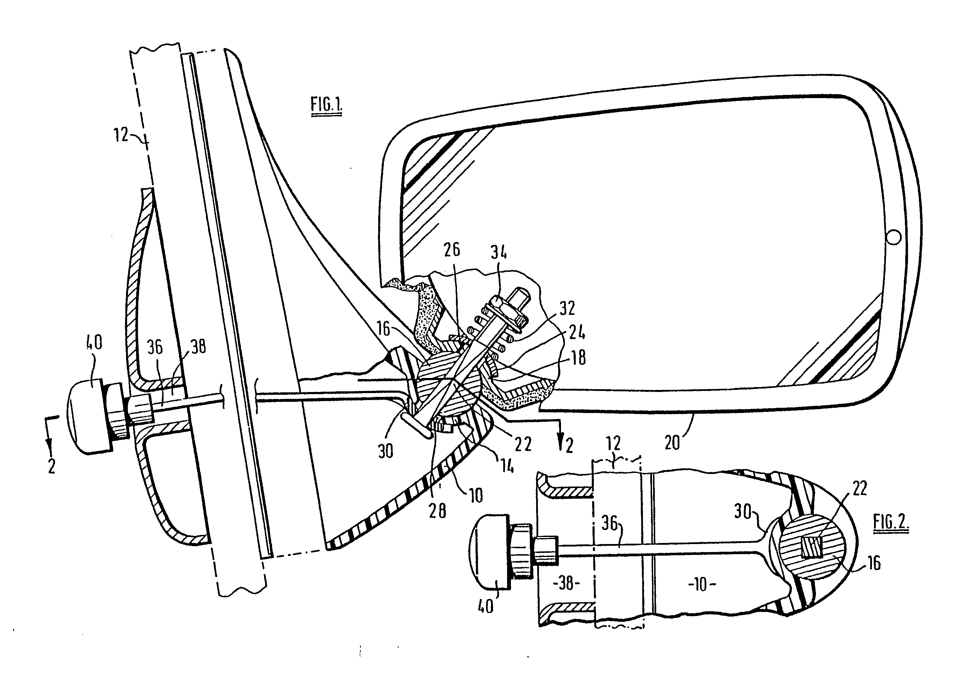

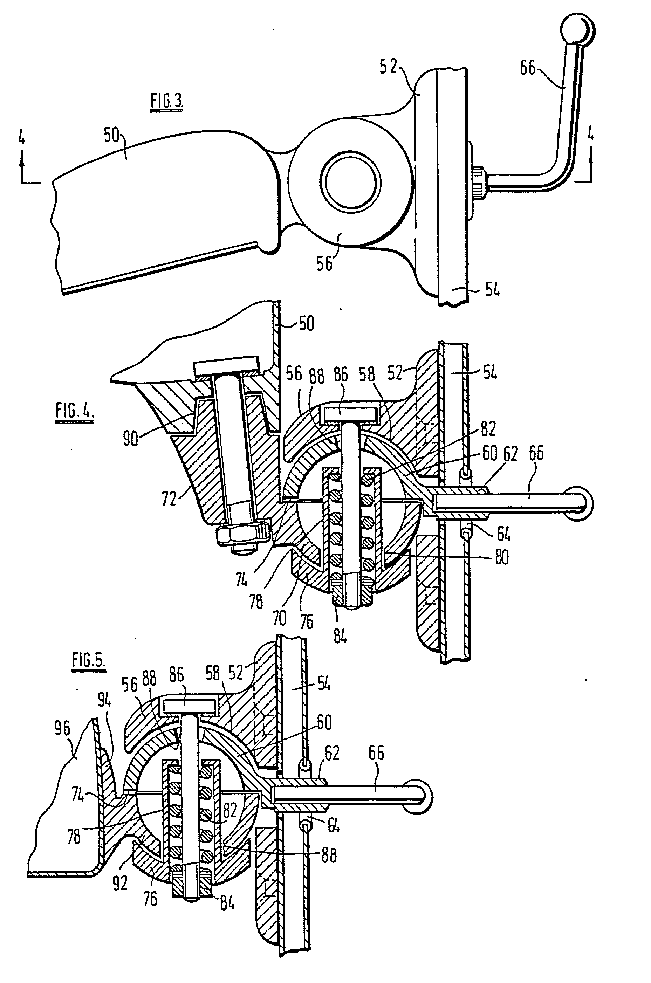

As illustrated in Figures 1 and 2, a rear-view mirror has a bracket 10 mounted on the body 12 of a vehicle. The bracket 10 has a part-spherical portion 14 with a concave outer surface. A coupling member 16, in the form of a sphere, engages in the outer surface of the portion 14 and also with a corresponding spherical portion 18 of a mirror housing 20. In order to hold the assembly together, a rod 22 of square cross-section extends through a square hole in a part-spherical washer 24 inside the housing 20, through circular hole 26 in the spherical portion 18 of the housing 20, through a square hole in the coupling member 16, through a circular hole 28 in the spherical portion 14 of the bracket 10 and finally through a square hole in a second part-spherical washer 30, which is inside the bracket 10. A compression spring 32 engages between the washer 24 and a nut 34 on the end of the rod so as to resiliently urge the various abuting part-spherical surfaces into engagement with one another.

The part-spherical washer 30 has handle 36 extending from its periphery through a horizontal slot 38 into the interior of the vehicle. On its free end the handle 36 has a knob 40.

The various square holes through which the rod 22 extends are a sliding fit on the rod 22 so as to inhibit relative angular movement. However, the two circular holes 26 and 28, in the housing 20 and the bracket 10 respectively, are over-size so as to permit a limited amount of relative radial movement as well as allowing relative angular movement.

In use, the housing 20 is first adjusted so as to be set in about the required orientation by manually grasping the housing itself so as to move it relative to the coupling member 16. Final adjustment can be performed from inside the vehicle by manipulating the knob 40 of the handle 26. Twisting of the handle 36 substantially about its own axis (actually moving it along an arcuate path about the centre of the spherical coupling member (16) moves the housing 20 about a horizontal axis so as to adjust it in the vertical direction. Angular movement of the handle 36 about the axis of the rod 22 moves the housing 20 about such axis so as to adjust the orientation of the housing 20 in the horizontal direction.

Figures 3 and 4 illustrate another embodiment of the invention comprising a mirror housing 50 and a bracket 52, the latter being mounted on the body 54 of a motor vehicle. The bracket 52 has projecting portion 56 with a concave part-spherical lower surface 58. Abutting the surface 58 is a hollow hemispherical member 60 having a projection 62 extending from the great circle periphery of the hemisphere through a horizontal slot 64 into the interior of the vehicle. A cranked handle 66 is secured to the end of the projection 62.

A second hollow hemisphere 70, located with its plane surface abutting that of the hemisphere 60, has a projection 72 extending in substantially the opposite direction to the projection 62 and carrying the mirror housing 50. The plane surface of the hemisphere 70 has a ridge 74 arranged to engage in a complementary groove in the abutting plane surface of the hemisphere 60 in order to define a preferred orientation for the mirror housing 50 relative to the handle 66.

In order to maintain the two hemispheres 60 and 70 in abutment with one another, a part-spherical washer 76 disposed with its concave surface in contact with the hemisphere 70 carries a cylindrical pocket 78 which extends into the space within the two hemispheres 60 and 70. The pocket 78 contains a compression spring 82 which abuts against a nut 84 which is screwed on to a bolt 86. The bolt 86 extends through a hole in the projection 56 on the bracket 52 and through a hole 88 in the hemisphere 60 before entering the inner end of the pocket 78. Thus, the spring 82 compresses the two hemispheres 60 and 70 between the part-spherical washer 76 and the hemispherical surface 58 of the projection 56 with a force which can be varied by varying the extent to which the nut 84 is screwed on to the bolt 86.

In use, the orientation of the mirror in the lateral direction can be adjusted by moving the handle 66 horizontally along the slot 64 so as to pivot the two hemispheres 60 and 70 about the bolt 86. Adjustment in the vertical direction can be effected by rotating the handle 66 about the axis of the projection 62 so as to cause a corresponding angular movement of the hemispheres 60 and 70, the holes 88 and 80 therein being sufficiently elongated to permit such angular movement through a few degrees.

In the event of the mirror housing 50 being subject to impact tending to fold it against the side of the vehicle, the ridge 74 becomes disengaged from its groove (increasing the compression of the spring 82) whereupon the hemisphere 70 can pivot about the bolt 86 relative to the hemisphere 60, the ridge 74 and its grooves ensuring that the mirror housing 50 can readily be restored to its previous position.

In order to permit the same mechanism to be used for mirrors where the normally desired orientation relative to the bracket 52 differs, for example left hand and right hand mirrors, the connection between the mirror housing 50 and the projection 72 incorporates a projection 90 in the shape of a truncated pyramid which engages in a correspondingly shaped recess in the mirror housing 50. With this arrangement, mirror housings for use on the left side and the right side of the vehicle respectively can be formed with their recesses for receiving the pyramid 90 at slightly different angles.

The mirror illustrated in Figures 3 and 4 is suitable for mounting on a vehicle door below the bottom edge of the window. Figure 5 illustrates an alternative arrangement which is suitable for mounting above the level of the bottom edge of the window, for example, on a triangular panel, commonly called a "cheater", filling the bottom front corner of the window opening. Most of the components of the mirror illustrated in Figure 5 are identical with the corresponding components illustrated in Figures 3 and 4 and are denoted with the same reference numerals. However, the second hemisphere 70 of the mirror illustrated in Figures 3 and 4 is replaced by a second hemisphere 92 having a projection 94 which is directly attached to the side edge of the mirror housing 96. Provision for alternative mounting angles for left and right hand mirrors can be made by varying the position of the ridge 74.

## Claims

1. An exterior rear-view mirror for a vehicle comprising a bracket (10) adapted to be secured to the vehicle and having a part-spherical surface (14), a mirror housing (20) having a coupling surface (18), a coupling member (16) having a first coupling surface of part-spherical shape of equal radius but opposite curvature to the part-spherical surface of the bracket (10) and a second coupling surface shaped to engage with the coupling surface (18) of the mirror housing (20) so as to permit angular movement of the coupling member (16) relative to the bracket (10) about a pivot axis through the centre of curvature of said part-spherical surfaces and angular movement of the mirror housing (20) relative to the coupling member (16), resilient biasing means (32), arranged to bias the part-spherical surface (14) of the bracket (10) into engagement with the first coupling surface of the coupling member (16) and to bias the coupling surface (18) of the mirror housing (20) into engagement with the second coupling surface of the coupling member (16), and a handle (36) permanently secured to said coupling member (16) for simultaneous angular movement therewith about said pivot axis, characterised in that said pivot axis comprises a rod (22) which also comprises the axis of angular movement between the mirror housing (20) and the coupling member (16) and in that the first and second coupling surfaces of the coupling member (16) are both convex and the coupling surface (18) of the mirror housing (20) is part-spherical, concave and of equal radius and opposite curvature to the second coupling surface of the coupling member (16), the mirror housing (20) having a part-spherical inner surface concentric with its coupling surface and the rod (22) extending through an oversize hole (26) int he housing (20) and through a second part-spherical washer (24) engaging with the inner part-spherical surface of the mirror housing (20).

2. An exterior rear-view mirror for a vehicle comprising a bracket (52) adapted to be secured to the vehicle and having a part-spherical surface (58), a mirror housing (50, 96) having a coupling surface (70, 92), a coupling member (60) having a first coupling surface of part-spherical shape of equal radius but opposite curvature to the part-spherical surface of the bracket (52) and a second coupling surface shaped to engage with the coupling surface (70, 92) of the mirror housing (50, 96) so as to permit angular movement of the coupling member (60) relative to the bracket (52) about a pivot axis through the centre of curvature of said part-spherical surfaces and angular movement of the mirror housing (50, 96) relative to the coupling member (60), resilient biasing means (82), arranged to bias the part-spherical surface (58) of the bracket (52) into engagement with the first coupling surface of the coupling member (60) and to bias the coupling surface (70, 92) of the mirror housing (50, 96) into engagement with the second coupling surface of the coupling member (60), and a handle (66) permanently secured to said coupling member (60) for simultaneous angular movement therewith about said pivot axis, characterised in that said pivot axis comprises a rod (86) which also comprises the axis of angular movement between the mirror housing (50, 96) and the coupling member (60), the coupling member (60) is part-spherical and the mirror housing (50, 96) has a projection (70, 92) of part-spherical shape having a plane surface which abuts a plane surface of the coupling member (60) both plane surfaces being perpendicular to said pivot axis, the resilient biasing means including a concave part-spherical member (76) arranged to engage with the part-spherical surface of said projection (70, 92) of the mirror housing (50, 96), the rod (86) projecting through the bracket and through elongate holes (80, 88) in the part-spherical projection (70, 92) and the coupling member (60) respectively and spring means (82) coupling the rod (86) between the bracket (52) and the part-spherical member (76) arranged to engage with the part-spherical projection (70, 92).

3. A rear-view mirror according to claim 2, characterised in that one of the plane surfaces is provided with a ridge (74) and the other with a complementary groove to define a preferred orientation of one relative to the other.

4. A rear-view mirror according to claim 2 or 3, wherein the coupling member (60) and the part-spherical projection (70, 92) are both hemispherical, the abutting plane surfaces thereof being great circles of the hemispheres.

5. A rear-view mirror according to claim 2, 3 or 4, characterised in that the part-spherical projection (70) is detachably coupled to the mirror housing (50) by means (90) defining the relative orientation thereof.

**Revendications**

1. Rétroviseur extérieur pour véhicule comprenant une console (10) agencée pour être fixée au véhicule et ayant une surface à partie sphérique (14), un boîtier (20) de miroir ayant une surface de liaison (18), un élément de liaison (16) ayant une première surface de couplage de forme à partie sphérique d'un rayon égal mais de courbure opposée à la surface à partie sphérique de la console (10) et une seconde surface de couplage conforméee pour venir en contact avec la surface de liaison (18) du boîtier (20) de miroir de façon à permettre un mouvement angulaire de l'élément de liaison (16) par rapport à la console (10) autour d'un axe de pivotement au centre de courbure desdites surfaces à partie sphérique et un mouvement angulaire du boîtier (20) de miroir par rapport à l'élément de liaison (16), un moyen de poussée élastique (32) agencé pour pousser la surface à partie sphérique (14) de la console (10) en contact avec la première surface de couplage de l'élément de liaison (16) et pour pousser la surface de liaison (18) du boîtier (20) de miroir en contact avec la seconde surface de couplage de l'élément de liaison (16), et une poignée (36) fixée de façon permanente audit élément de liaison (16) en vue d'un mouvement angulaire simultané avec lui autour dudit axe de pivotement, caractérisé en ce que ledit axe de pivotement comprend une tige (22) qui comprend aussi l'axe de mouvement angulaire entre le boîtier (20) de miroir et l'élément de liaison (16) et en ce que les première et seconde surfaces de couplage de l'élément de liaison (16) sont toutes deux convexes et la surface de liaison (18) du boîtier (20) de miroir est en partie sphérique, concave, de rayon égal et de courbure opposée à la seconde surface de couplage de l'élément de liaison (16), le boîtier (20) de miroir ayant une surface interne à partie sphérique concentrique à sa surface de couplage et la tige (22) s'étendant au travers d'un trou surdimensionné (26) dans le boîtier (20) et par une seconde rondelle (24) à partie sphérique venant au contact de la surface interne à partie sphérique du boîtier (20) de miroir.

2. Rétroviseur extérieur pour véhicule comprenant une console (52) agencée pour être fixée au véhicule et ayant une surface à partie sphérique (58), un boîtier (50, 96) de miroir ayant une surface de liaison (70, 92), un élément de liaison (60) ayant une première surface de couplage de forme à partie sphérique d'un rayon égal mais de courbure opposée à la surface à partie sphérique de la console (52) et une seconde surface de couplage conformée pour venir au contact de la surface de liaison (70, 92) du boîtier (50, 96) de miroir afin de permettre un mouvement angulaire de l'élément de liaison (60) par rapport à la console (52) autour d'un axe de pivotement au centre de courbure desdites surfaces à partie sphérique et un mouvement angulaire du boîtier (50, 96) de miroir par rapport à l'élément de liaison (60), un moyen de poussée élastique (82) agencé pour pousser la surface à partie sphérique (58) de la console (52) en contact avec la première surface de couplage de l'élément de liaison (60) et pour pousser la surface de liaison (70, 92) du boîtier (50, 96) de miroir en contact avec la seconde surface de couplage de l'élément de liaison (60), et une poignée (66) fixée en permanence audit élément de liaison (60) en vue d'un mouvement angulaire simultané avec lui autour dudit axe de pivotement, caractérisé en ce que ledit axe de pivotement comprend une tige (86) qui comprend aussi l'axe de mouvement angulaire entre le boîtier (50, 96) de miroir et l'élément de liaison (60), l'élément de liaison (60) est à partie sphéri-

que et le boîtier (50, 96) de miroir présente un prolongement (70, 92) à partie sphérique ayant une surface plane qui bute contre une surface plane de l'élément de liaison (60), les deux surfaces planes étant perpendiculaires audit axe de pivotement, le moyen de poussée élastique comportant un élément à partie sphérique concave (76) agencé pour venir au contact de la surface à partie sphérique dudit prolongement (70, 92) du boîtier (50, 96) de miroir, la tige (86) faisant saillie à travers la console et à travers des trous allongés (80, 88) dans le prolongement à partie sphérique (70, 92) et l'élément de liaison (60) respectivement et le moyen élastique (82) couplant la tige (86) entre la console (52) et l'élément à partie sphérique (76) agencé pour venir au contact du prolongement à partie sphérique (70, 92).

3. Rétroviseur selon la revendication 2, caractérisé en ce qu'une des surfaces planes est munie d'une arête (74) et l'autre d'une rainure complémentaire pour définir une orientation préférée de l'une par rapport à l'autre.

4. Rétroviseur selon l'une des revendications 2 ou 3, caractérisé en ce que l'élément de liaison (60) et le prolongement à partie sphérique (70, 92) sont tous deux hémisphériques, leurs surfaces planes qui butent étant les grands cercles des hémisphères.

5. Rétroviseur selon l'une quelconque des revendications 2 à 4, caractérisé en ce que le prolongement (70) à partie sphérique est relié de façon amovible au boîtier (50) de miroir par un moyen (90) définissant son orientation relative.

## Patentansprüche

1. Außenrückspiegel für ein Fahrzeug mit einer zur Befestigung an dem Fahrzeug geeigneten Halterung (10), die eine kugelteilförmige Fläche (14) aufweist, einem Spiegelgehäuse (20) mit einer Kupplungsfläche (18), einem Kupplungsteil (16) mit einer ersten Kupplungsfläche von kugelteilförmiger Form mit einem gleichen Radius, jedoch einer der kugelteilförmigen Fläche der Halterung (10) entgegengesetzten Krümmung und einer zweiten Kupplungsfläche mit einer Form zum Eingriff mit der Kupplungsfläche (18) des Spiegelgehäuses (20), so daß eine winklige Bewegung des Kupplungsteils (16) relativ zur Halterung (10) um eine Schwenkachse durch den Krümmungsmittelpunkt der kugelteilförmigen Flächen und eine winklige Bewegung des Spiegelgehäuses (20) relativ zum Kupplungsteil (16) möglich ist, einem elastischen Vorspannmittel (32), das zur Vorspannung der mit der ersten Kupplungsfläche des Kupplungsteils (16) in Eingriff stehenden kugelteilförmigen Fläche (14) der Halterung (10) und zur Vorspannung der mit der zweiten Kupplungsfläche des Kupplungsteils (16) in Eingriff stehenden Kupplungsfläche (18) des Spiegelgehäuses (20) angeordnet ist, und mit einem dauernd am Kupplungsteil (16) für eine gleichzeitige winklige Bewegung damit um die Schwenkachse befestigten Handgriff (36), dadurch gekennzeichnet, daß die Schwenkachse eine Stange (22) umfaßt, die ebenfalls die Achse der winkligen Bewegung zwischen dem Spiegelgehäuse (20) und dem Kupplungsteil (16) umfaßt, und daß die erste und die zweite Kupplungsfläche des Kupplungsteils (16) jeweils konvex und die Kupplungsfläche (18) des Spiegelgehäuses (20) kugelteilförmig konkav und von gleichem Radius ist und eine zur zweiten Kupplungsfläche des Kupplungsteils (16) entgegengesetzte Krümmung hat, daß das Spiegelgehäuse (20) eine kugelteilförmige, mit ihrer Kupplungsfläche konzentrische Innenfläche hat und sich die Stange (22) durch ein übergroßes Loch (26) in dem Gehäuse (20) und durch eine zweite kugelteilförmige Unterlegscheibe (24), die mit der kugelteilförmigen Innenfläche des Spiegelgehäuses (20) in Eingriff steht, erstreckt.

2. Außenrückspiegel für ein Fahrzeug mit einer zur Befestigung an dem Fahrzeug in geeigneter Halterung (52), die eine kugelteilförmige Fläche (58) aufweist, einem Speigelgehäuse (50, 96) mit einer Kupplungsfläche (70, 92), einem Kupplungsteil (60) mit einer ersten Kupplungsfläche von kugelteilförmiger Form mit einem gleichen Radius, jedoch einer der kugelteilförmigen Fläche der Halterung (52) entgegengesetzten Krümmung und einer zweiten Kupplungsfläche mit einer Form zum Eingriff mit der Kupplungsfläche (70, 92) des Spiegelgehäuses (50, 96), so daß eine winklige Bewegung des Kupplungsteils (60) relativ zur Halterung (52) um eine Schwenkachse durch den Krümmungsmittelpunkt der kugelteilförmigen Flächen und eine winklige Bewegung des Spiegelgehäuses (50, 96) relativ zum Kupplungsteil (60) möglich ist, einem elastischen Vorspannmittel (82), das zur Vorspannung der mit der ersten Kupplungsfläche des Kupplungsteils (60) in Eingriff stehenden kugelteilförmigen Fläche (58) der Halterung (52) und zur Vorspannung der mit der zweiten Kupplungsfläche des Kupplungsteils (60) in Eingriff stehenden Kupplungsfläche (70, 92) des Spiegelgehäuses (50, 96) angeordnet ist, und mit einem dauernd am Kupplungsteil (60) für eine gleichzeitige winklige Bewegung damit um die Schwenkachse befestigten Handgriff (66), dadurch gekennzeichnet, daß die Schwenkachse eine Stange (86) umfaßt, die ebenfalls die Achse der winkligen Bewegung zwischen dem Spiegelgehäuse (50, 96) und dem Kupplungsteil (60) umfaßt, daß das Kupplungsteil (60) kugelteilförmig ist und das Spiegelgehäuse (50, 96) einen kugelteilförmigen Vorsprung (70, 92) mit einer ebenen Fläche hat, die gegen eine ebene Fläche des Kupplungsteils (60) anliegt, wobei beide ebenen Flächen senkrecht zu der Schwenkachse verlaufen, und daß das elastische Vorspannmittel ein konkaves kugelteilförmiges Teil (76), das zum Eingriff mit der kugelteilförmigen Fläche des Vorsprungs (70, 92) des Spiegelgehäuses (50, 96) angeordnet ist, die sich durch die Halterung und durch Langlöcher (80, 88) in dem kugelteilförmigen Vorsprung (70, 92), bzw. dem Kupplungsteil (60) erstreckende Stange (86) und ein die Stange (86) zwischen der Halterung (52) und dem kugelteilförmigen Teil (76), das zum Eingriff mit dem kugelteilförmigen Vorsprung (70, 92) angeordnet ist, verbindendes Federmittel (82) umfaßt.

3. Rückspiegel nach Anspruch 2, dadurch gekennzeichnet, daß eine der ebenen Flächen mit einem Steg (74) und die andere mit einer komplementären Nut zur Bestimmung einer bevorzugten Ausrichtung der einen relativ zur anderen versehen ist.

4. Rückspiegel nach Anspruch 2 oder 3, dadurch gekennzeichnet, daß das Kupplungsteil (60) und der kugelteilförmige Vorsprung (70, 92) beide halbkugelförmig sind, und die anliegenden ebenen Flächen von ihnen große Kreise der Halbkugel sind.

5. Rückspiegel nach Anspruch 2, 3 oder 4, dadurch gekennzeichnet, daß der kugelteilförmige Vorsprung (70) lösbar mit dem Spiegelgehäuse (50) mittels der die relative Ausrichtung zwischen ihnen bestimmenden Mittel (90) gekuppelt ist.

FIG.1.

FIG.2.

FIG. 3.

FIG. 4.

FIG. 5.